# EUROPÄISCHE PATENTANMELDUNG

(11) **EP 3 862 296 A1**
(43) Veröffentlichungstag der Anmeldung: **11.08.2021**
(21) Anmeldenummer: 20178036.8
(22) Anmeldetag: 03.06.2020
(51) Int. Cl.: B65G 1/02

(54) **HOCHREGALLAGER UND ABLAGESATTEL HIERFÜR**

(30) Priorität: 04.02.2020 DE 202020100585 U
(71) Anmelder: Vollert Anlagenbau GmbH, 74189 Weinsberg (DE)
(72) Erfinder: SEEKATZ, Stephan, 74189 Weinsberg (DE); VOLLERT, Hans-Jörg, 74189 Weinsberg (DE)
(74) Vertreter: Keil & Schaafhausen Patentanwälte PartGmbB

(57) **Zusammenfassung**

Die Erfindung betrifft ein Hochregallager, insbesondere zur Lagerung von Coils oder dgl. im Wesentlichen zylindrischen Körpern. Das Hochregallager weist mehrere Paare vertikaler Stützen (2) auf, an denen jeweils mehrere Streben (7) und mehrere Gegenstreben (8) angelenkt sind, wobei die Paare von Stützenpaare (2) mehrere vertikal übereinander angeordnete Regalfächer aufweisen. Jeweils eine Strebe (7) und eine Gegenstrebe (8) bilden mit der Stütze (2), an der sie angelenkt sind, ein Dreieck mit einer von der jeweiligen Stütze (2) wegweisenden Ablageecke (9). Weiter sind die Stützen (2) eines Stützenpaares derart zueinander angeordnet, dass deren einander zugewandte Ablageecken (9) voneinander beabstandet sind, um ein Regalfach mit einem Freiraum (10) zwischen den Ablageecken (9) zu bilden. Weiter betrifft die Erfindung einen Ablagesattel zur Verwendung in einem solchen Hochregallager (1).

## Beschreibung

Die Erfindung betrifft ein Hochregallager, insbesondere zur Lagerung von Coils oder dgl. im Wesentlichen zylindrischen Körpern, sowie einen Ablagesattel für ein solches Hochregallager.

Hochregallager werden eingesetzt, um Gegenstände unterschiedlicher Art und Größe dauerhaft oder temporär in Regalfächern zu lagern. So werden Hochregallager auch für die Herstellung von Aluminiumwalzprodukten eingesetzt. Hierbei walzen die Hersteller von Aluminiumwalzprodukten sogenannte Brammen im Temperaturbereich von bis zu 400°C auf eine Dicke von wenigen Millimeter und wickeln diese im Kaltwalzwerksbereich auf eine Spule, d.h. einen Grundkörper z.B. aus Stahl, zu einem sogenannten Coil auf. Dieser so entstandene Coil mit einer Masse von teilweise bis zu 35t wird anschließend zur Abkühlung bzw. Kommissionierung in ein Hochregallager eingelagert. Zum Auslagern fährt ein teleskopartig höhenverstellbarer Träger (nachfolgend als Teleskop bezeichnet) des Regalbediengeräts in das Lagerfach ein und hebt den Coil vom Ablagebock ab. Danach wird das Coil zu einem Übergabebock für den weiteren Transport gebracht. Bekannte Hochregallager weisen hierbei mehrere vertikale Stützen auf, die durch horizontale Längsträger miteinander verbunden sind, um einzelne Regalfächer auszubilden. Auf den Längsträgern sind jeweils zwei voneinander beabstandete Ablageböcke montiert.

Das Einlagern in ein Hochregal erfolgt dabei mittels eines Regalbediengeräts, das mit dem Teleskop den Coil in das Lagerfach einbringt und ihn auf die beiden Ablageböcke absetzt. Hierzu muss das Teleskop des Regalbediengeräts oberhalb des jeweiligen Längsträgers in einen Freiraum zwischen die Ablageböcke eingeführt werden. Beim Einlagern und Absetzten des Coils tritt dessen Mantelfläche in Kontakt mit dem sogenannten Sattel. Bei herkömmlichen Konstruktionen ist der Sattel teilweise als gebogene Blechkonstruktion ausgebildet. Diese gebogene Blechkonstruktion ermöglicht es, Coils unterschiedlicher Durchmesser aufzunehmen, wobei zwischen Coil und Sattel im Querschnitt nur ein Kontaktpunkt existiert. Dies führt zu lokal hohen Druckspannungen. Gerade Coils, die im heißen Zustand (bis zu 400°C) eingelagert werden, reagieren entsprechend empfindlich auf Druckspannungen, die Beschädigungen des Coil-Mantels und damit Ausschuss an Material hervorrufen können.

Aufgabe der vorliegenden Erfindung ist es demgegenüber, ein Hochregallager sowie einen Ablagesattel hierfür bereitzustellen, die eine platzsparende und schonende Einlagerung von Coils und dergleichen im Wesentlichen zylindrischen Körpern ermöglicht.

Diese Aufgabe wird mit einem Hochregallager nach Anspruch 1 sowie einem Ablagesattel nach Anspruch 11 gelöst.

Ein erfindungsgemäßes Hochregallager, das beispielsweise zur Lagerung von Coils oder dgl. im Wesentlichen zylindrischen Körpern geeignet ist, weist mehrere Paare vertikaler Stützen auf, an denen jeweils mehrere Streben und mehrere Gegenstreben angelenkt sind. Die Stützenpaare können mehrere vertikal übereinander angeordnete Regalfächer bilden. Jeweils eine Strebe und eine Gegenstrebe definiert mit der Stütze, an der sie angelenkt sind, ein Dreieck mit einer von der jeweiligen Stütze wegweisenden Ablageecke. Dabei sind die Stützen eines Stützenpaares so zueinander angeordnet, dass deren einander zugewandte Ablageecken voneinander beabstandet sind, um ein Regalfach mit einem Freiraum zwischen den Ablageecken zu bilden.

Ein bei herkömmlichen Hochregallagern vorgesehener Längsträger zwischen den Stützen kann daher entfallen. Schon dies verringert die Bauhöhe des Regals bzw. es können bei gleicher Bauhöhe mehr Regalfächer übereinander angeordnet werden. Die dreieckige Gestaltung der Streben und Gegenstreben passt dagegen ohne zusätzlichen Bauraum in Höhenrichtung in den nicht von den Coils oder dgl. Zylindern eingenommenen seitlichen Raum der Regalfächer.

Zusätzlich bewirkt der erfindungsgemäß vorgesehene Freiraum zwischen den Ablageecken, dass das Teleskop eines Regalbediengeräts zwischen zwei übereinander gelagerten Coils ein- und ausfahren kann. Dabei muss das Teleskop lediglich zu den Coils selbst einen minimalen Abstand in Höhenrichtung einhalten, um diese nicht zu beschädigen. Gegenüber der bekannten Lösung, in der die Coils nach oben einen Abstand zum Längsträger und das Teleskop des Regalbediengeräts nach unten einen Abstand zum Längsträger und nach oben einen Abstand zum Coil einhalten muss, wird weiterer Bauraum in Höhenrichtung eingespart, ohne die Funktion oder Bedienbarkeit zu beeinträchtigen.

Am Beispiel eines Hochregallagers für zu Coils aufgewickelten Aluminium mit Massen von bis zu 35t lässt sich die lichte Höhe jedes Regalfachs um bis zu ca.400mm reduzieren, wodurch entsprechend Stahlbaumasse eingespart werden kann. Im Fall eines zweizeiligen Regals mit 7 Lagerfächern übereinander und 25 Zeilen nebeneinander bedeutet dies eine Reduzierung der Gesamthöhe des Regals um ca.1,45m, was ca.5% der Höhe entspricht, und eine Reduzierung der Stahlbaumasse des Regals um ca.130t, was ca.18% der Stahlbaumasse entspricht. Mit der Reduzierung der Regalhöhe gehen eine Reduzierung der üblichen Wandverkleidung des Regals sowie eine Reduzierung der Höhe des Regalbediengeräts einher. Damit lässt sich das erfindungsgemäße Hochregallager erheblich günstiger, ressourcensparender und mit weniger Bauraum realisieren.

In dem erfindungsgemäßen Hochregallager beträgt der Freiraum mindestens 10%, insbesondere mindestens 20%, vorzugsweise etwa 25% des Abstands des Stützenpaares. Dies erlaubt es, mit dem Teleskop des Regalbediengeräts in den Freiraum ein- und auszufahren.

Die Streben und die Gegenstreben können starr mit den jeweiligen Stützen verbunden sein, beispielsweise verschraubt oder verschweißt.

Für die Lastabtragung ist es vorteilhaft, wenn die schräg nach oben verlaufenden Streben länger sind als die schräg nach unten verlaufenden Gegenstreben. So können die Streben mit den Stützen beispielsweise einen Winkel von etwa 30° bis etwa 75°, insbesondere etwa 53°, bilden und/oder die Gegenstreben bilden mit den Stützen einen Winkel von etwa 20° bis etwa 60°, insbesondere etwa 37°. Die Streben können dabei mit den Gegenstreben in den Ablageecken einen Winkel von etwa 60° bis etwa 120°, insbesondere etwa 90°, bilden.

Beim Einlagern und Absetzten des Coils tritt dessen Mantelfläche in Kontakt mit dem sogenannten Sattel. Vorzugsweise sind die Ablageecken jeweils mit einem Ablagesattel zum Absetzen eines im Wesentlichen zylindrischen Körpers versehen. Der Sattel kann, wie bei herkömmlichen Lagern, als gebogene Blechkonstruktion ausgebildet sein. Nach einer bevorzugten Ausführungsform der Erfindung wird dieses starre Blech durch eine Schwinge mit Gelenk ersetzt. Insbesondere kann der Ablagesattel als eine Schwinge ausgebildet sein, die über ein Gelenk schwenkbar an der Ablageecke befestigt ist, wobei der Ablagesattel relativ zu der Ablageecke beispielsweise begrenzt schwenkbar und/oder in eine definierte Position vorgespannt ist.

Der wesentliche Vorteil der Schwingenkonstruktion liegt darin begründet, dass sie sich automatisch der Außenkontur des Coils anpassen kann. Wenn der Ablagesattel zwei voneinander beabstandete Auflageflächen aufweist, gelingt es hierdurch, unabhängig vom Durchmesser des Coils immer eine Zweipunktlagerung sicherzustellen und somit die Flächenpressung zwischen Coil und Sattel, verglichen mit der herkömmlichen Lösung, nahezu zu halbieren. Gerade bei Coils, die im heißen Zustand (bis zu 400°C) eingelagert werden und damit entsprechend empfindlich auf Druckspannungen reagieren, reduziert dies die Beschädigungen des Coil-Mantels und damit den Ausschuss an Material.

Die Aufgabe der Erfindung wird zudem durch einen Ablagesattel gelöst, der insbesondere zur Verwendung in einem Hochregallager der oben genannten Art geeignet ist. Ein Ablagesattel weist hierzu beispielsweise wenigstens eine Auflagefläche zum Absetzen eines im Wesentlichen zylindrischen Körpers, eine aus wenigstens einer Strebe gebildete Stützstruktur und ein Gelenk auf, über das die wenigstens eine Auflagefläche schwenkbar an der Stützstruktur befestigt ist. Bei der Verwendung, beispielsweise in einem Hochregallager, kann die Stützstruktur einen mit den Stützen des Hochregallagers verbindbaren Ablagebock zur platzsparenden Aufnahme von Coils oder dgl. bilden.

Das Gelenk des Ablagesattels kann ein mit der Auflagefläche verbundenes Innenlager und ein mit der Stützstruktur verbundenes Außenlager schwenkbar verbinden. Um eine zur Aufnahme von Coils oder dgl. geeignete Ausrichtung der Auflagefläche relativ zu der Stützstruktur (Aufnahmebock) zu erreichen, kann die Schwenkbewegung der Auflagefläche relativ zu der Stützstruktur durch wenigstens einen Endanschlag, insbesondere zwei Endanschläge, begrenzt sein. Alternativ oder zusätzlich kann die Auflagefläche mittels wenigstens eines elastisch verformbaren Elements, beispielsweise einer Feder, relativ zu der Stützstruktur in eine definierte Position vorgespannt sein.

Beschädigungen an den zu lagernden Gegenständen lassen sich beispielsweise dadurch vermeiden, dass die Auflagefläche, zumindest bereichsweise, mit einer Schonauflage aus einem gegenüber der Auflagefläche, die aus Stahl bestehen kann, weicheren Material, wie Aluminium, versehen ist.

Nachfolgend wird die Erfindung anhand eines Ausführungsbeispiels und unter Bezugnahme auf die Zeichnung näher erläutert. Dabei bilden alle beschriebenen und/oder bildlich dargestellten Merkmale für sich den Gegenstand der Erfindung, unabhängig von ihrer Zusammenfassung in den Ansprüchen oder deren Rückbezügen.

Es zeigen schematisch:
- Figur 1: in schematischer Schnittansicht einen Ausschnitt eines herkömmlichen Hochregallagers,
- Figur 2: in schematischer Schnittansicht einen Ausschnitt eines erfindungsgemäßen Hochregallagers,
- Figur 3: in schematischer Schnittansicht einen erfindungsgemäßen Ablagesattel,
- Figuren 4a - 4c: ein Teil des Ablagesattels nach Figur 3 zusammen mit unterschiedlichen Coil-Durchmessern,
- Figuren 5a, 5b: ein Teil eines erfindungsgemäßen Hochregallagers,
- Figuren 6a, 6b: Details des Hochregallagers nach Figur 5,
- Figuren 7a - 7d: Details des Ablagesattels des Hochregallagers nach Figur 5,
- Figuren 8a, 8b: das Auflegen eines Coils mit kleinem Durchmesser auf einen Ablagesattel nach einer weiteren Ausführungsform der Erfindung;
- Figuren 9a, 9b: das Auflegen eines Coils mit großem Durchmesser auf den Ablagesattel nach Figur 8a; und
- Figur 10: Details des Ablagesattels nach Figur 8a eines Hochregallagers.

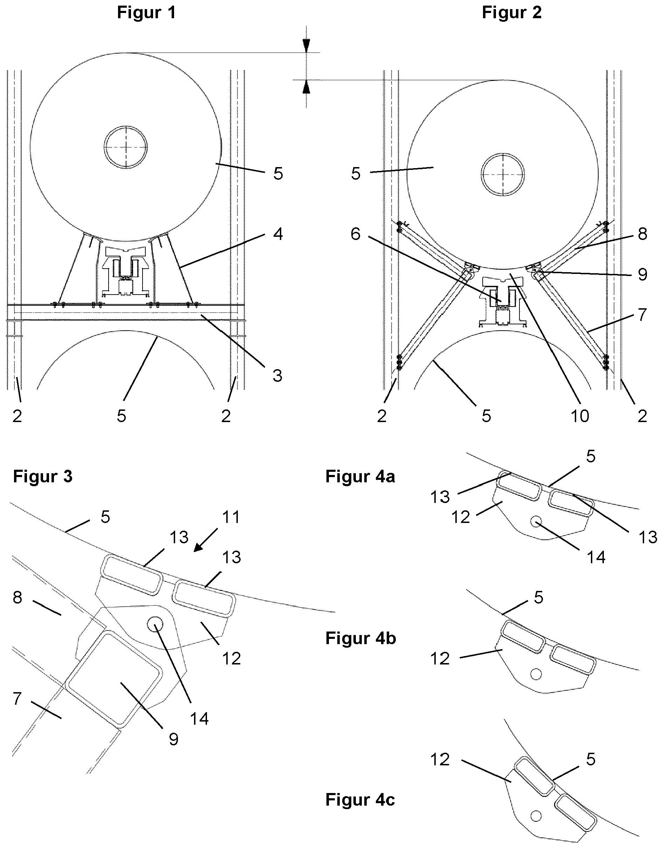

In Figur 1 ist ein Hochregallager nach dem Stand der Technik auszugsweise in Schnittansicht dargestellt. Das Hochregallager 1 weist zwei vertikale Stützen 2 auf, die durch einen horizontalen Längsträger 3 miteinander verbunden sind. Hierdurch wird oberhalb und unterhalb des Längsträgers 3 jeweils ein Regalfach ausgebildet. Auf dem Längsträger in 3 sind zwei voneinander beabstandet angeordnete Ablageböcke 4 befestigt, auf dem ein Coil abgelegt werden kann. Die dem Längsträger 3 abgewandte Seite der Ablageböcke 4 ist dabei als eine gebogene Blechkonstruktion ausgebildet, um Coils unterschiedlicher Durchmesser aufnehmen zu können.

In der Schnittansicht der Figur 1 ist weiter ein Teleskop 6 eines nicht näher dargestellten Regalbediengeräts gezeigt, der in den Zwischenraum zwischen den beiden Ablageböcken 4 verfahren werden kann, um ein Coil 5 in dem jeweiligen Regalfach abzusetzen oder herauszuheben. In Figur 1 ist unterhalb des Längsträgers 3 der obere Teil eines weiteren Coils 5 angedeutet. Es ist aus Figur 1 ersichtlich, dass unterhalb des Längsträgers 3 ein Freiraum zu dem darunter liegenden Coil 5 verbleiben muss, um das Absetzen bzw. Herausheben des Coils 5 durch das Teleskop 6 zu ermöglichen. Weiter ist ersichtlich, dass die Ablageböcke 4 oberhalb des Längsträgers 3 eine ausreichende Höhe aufweisen müssen, um das Teleskop 6 des Regalbediengeräts in den Raum zwischen der Unterseite des Coils 5 und der Oberseite des Längsträgers 3 einzubringen. Hierdurch haben zwei übereinander angeordnete Coils 5 in vertikaler Richtung einen vergleichsweisen großen Abstand zueinander.

Das Hochregallager 1 in der erfindungsgemäßen Ausführungsform nach Figur 2 weist ebenfalls zwei parallel zueinander angeordnete vertikale Stützen 2 auf. Der Längsträger 3 der Ausführungsform nach Figur 1 ist in der erfindungsgemäßen Ausführungsform nach Figur 2 jedoch vollständig entfallen. Zur Aufnahme von Coils 5 sind in dem Hochregallager 1 nach Figur 2 an jeder Stütze 2 jeweils eine Strebe 7, die von der Stütze 2 schräg nach oben verläuft, und eine Gegenstrebe 8, die von der Stütze 2 schräg nach untern verläuft, ausgebildet.

Die Strebe 7 und die Gegenstrebe 8 sind beispielsweise starr über eine Verschraubung mit der jeweiligen Stütze 2 verbunden. Weiter sind die der Stütze 2 abgewandten Enden der Strebe 7 und der Gegenstrebe 8 an einer Ablageecke 9 miteinander verbunden. Die Strebe 7, die Gegenstrebe 8 und ein Bereich der Stütze 2 bilden damit ein Dreieck, das die Funktion eines Ablagebocks übernimmt. In der dargestellten Ausführungsform sind die Strebe 7 und die Gegenstrebe 8 in der Ablageecke 9 in einem Winkel von etwa 90° miteinander verbunden. Die Streben 7 sind in der dargestellten Ausführungsform dabei länger als die Gegenstreben 8, wobei die Streben 7 einen Winkel von etwa 53° mit den Stützen bilden und die Gegenstreben 8 einen Winkel von etwa 37° mit den Stützen bilden. Abweichend hiervon können die Neigungswinkel der Streben und Gegenstreben an die minimalen und maximalen Durchmesser der aufzunehmenden Coils angepasst geändert werden. So ist es beispielsweise möglich, dass die Stützen 2 mit den Streben 7 und den Gegenstreben 8 ein gleichschenkliges Dreieck bilden.

Das in Figur 2 gezeigte Stützenpaar 2 ist so angeordnet, dass die Ablageecken 9 der Streben 7 und Gegenstreben 8 aufeinander zuweisen und voneinander beabstandet sind. Hierdurch entsteht ein Freiraum 10 zwischen den Ablageecken 9, der ausreichend groß ist, dass das Teleskop 6 des Regalbediengeräts in den Freiraum 10 eingebracht werden kann, um ein Coil 5 auf den Ablageecken 9 abzusetzen bzw. aus dem Hochregallager 1 zu entnehmen. Wie dem zwischen den Figuren 1 und 2 durch Pfeile angedeuteten Höhenunterschied zu entnehmen ist, ist die erfindungsgemäße Ausgestaltung der Figur 2 platzsparender gegenüber der herkömmlichen Bauweise nach Figur 1.

Wie aus der Detailansicht der Figur 3 ersichtlich ist, ist an den Ablageecken 9 jeweils ein spezieller Ablagesattel 11 vorgesehen, auf dem ein Coil 5 bzw. ein vergleichbarer zylindrischer Körper abgesetzt werden kann. Der Ablagesattel 11 weist ein Element 12 auf, das wenigstens eine, in der dargestellten Ausführungsform zwei, Auflageflächen 13 aufweist. Das Element 12 ist über ein Gelenk 14 schwenkbar an den jeweiligen Ablageecken 9, das heißt an den Streben 7 und den Gegenstreben 8, befestigt. Auf diese Weise wird eine Schwingenkonstruktion gebildet, die eine Anpassung an die Außenkontur des Coils 5 oder dergleichen erlaubt.

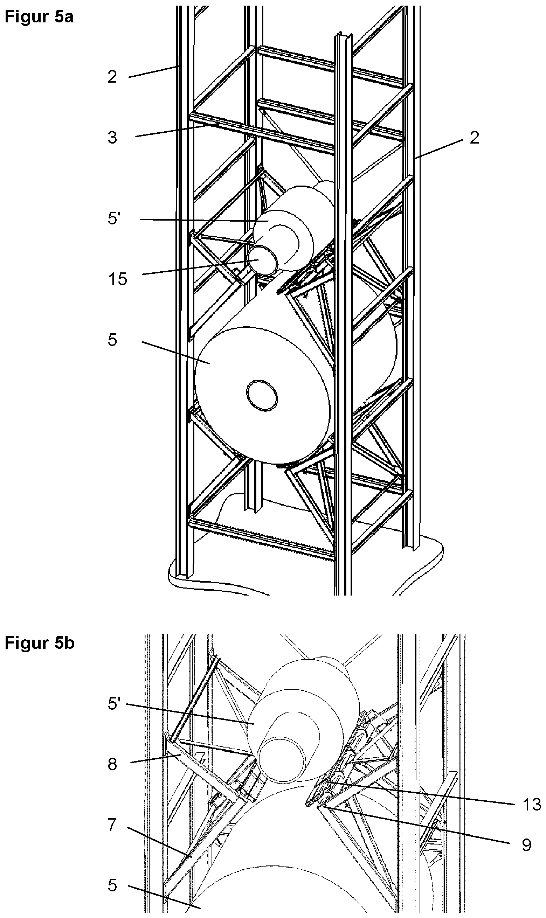

Der Vorteil der durch den Ablagesattel 11 gebildeten Schwingenkonstruktion ist auch aus den Figuren 4a bis 4c sowie 5a und 5b ersichtlich. Dabei zeigt Figur 4a die Ausrichtung des Elements 12 mit den Auflageflächen 13 bei der Aufnahme eines Coils 5 mit großem Durchmesser. Figur 4b zeigt die Aufnahme eines Coils 5 mit mittlerem Durchmesser und Figur 4c zeigt die Aufnahme eines Coils 5 mit kleinem Durchmesser. Ein Vergleich der Figuren 4a bis 4c veranschaulicht, wie das Element 12 abhängig von dem Durchmesser des Coils 5 verschwenkbar ist, so dass jeweils beide Auflageflächen 13 an den Coil 5 anliegen. Dies ist auch in den Figuren 5a und 5b gezeigt, in denen jeweils eine Spule 15 mit einem Coil 5 mit größerem Durchmesser, sowie ein Coil 5' mit kleinerem Durchmesser in einem Hochregal eingelagert dargestellt sind.

Durch die Schwenkbarkeit entsteht, unabhängig von dem Durchmesser des Coils, in Schnittansicht immer eine Zweipunktlagerung, wodurch die Flächenpressung zwischen Coil und Sattel, verglichen mit der herkömmlichen Lösung aus Figur 1 im Wesentlichen halbiert wird. Gerade bei Coils, die im heißen Zustand mit bis zu 400°C eingelagert werden und damit entsprechend empfindlich auf Druckspannungen reagieren, reduziert dies die Beschädigungen des Coil-Mantels und damit den Ausschuss an Material.

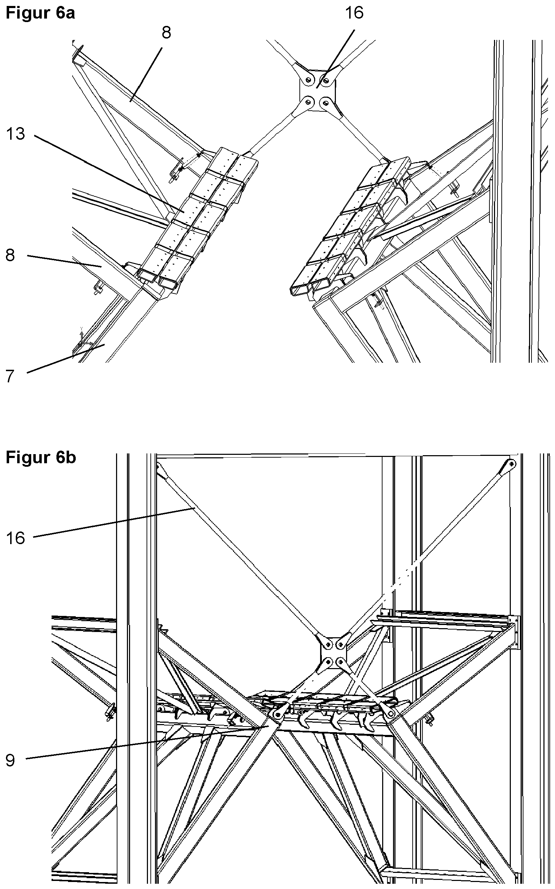

Wenn das Hochregal in Längsrichtung an dessen Rückwand durch Verbände 16 zu stabilisieren ist, was insbesondere bei sehr langen Regalen erforderlich ist, kann der Ablagebock, d.h. die Konstruktion aus Strebe 7, gegenstrebe 8 und Ablageecke 9, als integraler Bestandteil der Regalstabilisierung herangezogen werden. Dies ist in den Figuren 6a und 6b dargestellt, die ein Regalfach von vorne bzw. von hinten zeigen.

Gleichzeitigt ermöglicht die in den Figuren 2 bis 7c dargestellte Ausführung, dass zusätzliche Schonauflagen (in Figur 3 nicht dargestellt) sehr einfach mit aufgebracht werden könnten, da auch hier keine bzw. kaum Scherkräfte entstehen. So kann der Coilsattel 11, der beispielsweise aus Stahl besteht, optional mit z.B. aufgenieteten Schonauflagen 17 aus Aluminiumblech ausgestattet werden. Das relativ weiche Aluminium reduziert die Beschädigungen am Coilmantel 5 bzw. 5' abermals. Die Nietköpfe sind in dem dargestellten Beispiel versenkt. Zum Austausch verschlissener Auflagen 17 werden die Niete einfach ausgebohrt. Die Schonauflage 17 kann über die Länge des Sattels 11 unterbrochen sein. Im dargestellten Beispiel der Figuren 6a bis 7d sind vier Freimachungen 18 vorgesehen, um ein Freiliegen der Coilumreifungen sicherzustellen.

Es können auch andere Materialien als Schonauflage 17, die temperaturbeständig oder auch wesentlich weicher sind, einfach aufgebracht werden. Auf Grund der Konstruktion entstehen hier geringe Scherkräfte. Bei anderen Lösungsansätzen ist das Aufbringen von anderen Materialien als Schonauflage 17 sehr kompliziert und auf Grund der Scherkräfte kaum (dauerhaft) umsetzbar.

Die Gestaltung der Ablageböcke 7, 8, 9 ist ein eigenständiger Aspekt der vorliegenden Erfindung. So kann dieses Prinzip der konstruktiven Ausbildung des Ablagesattels 11 auch auf alle anderen Ablageböcke außerhalb des Hochregallagers angewendet werden.

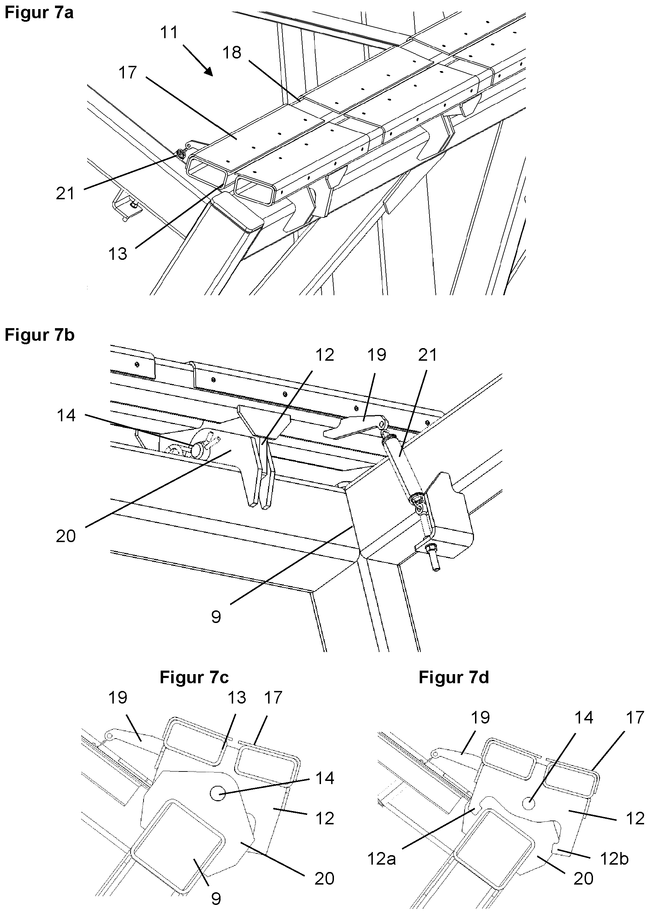

Um die Ablageflächen 13 des Ablagesattels 11, wie in Figur 3 gezeigt, schräg nach oben auszurichten, kann das Element 12 relativ zur Ablageecke 9 begrenzt schwenkbar sein. Hierzu ist das schwenkbare Element 12, d.h. das mit den Ablageflächen 13 starr verbundene Innenlagerteil, mit in Figur 7d gezeigten Endanschlägen 12a, 12b versehen.

Weiter können an dem schwenkbaren Element 12 Arme 19 ausgebildet sein, um das Element 12 (Innenlager) relativ zu dem an der Ablageecke 9 festgelegten Außenlager 20 mittels einer Feder 21 auszurichten. Alternativ oder zusätzlich zu den Endanschlägen ist es somit möglich, das Element 12 durch eine Feder 21 oder dergleichen elastisch verformbares Element in einer schräg nach oben ausgerichteten Position vorzuspannen. Aus dieser Position kann das Element 12 gegen die Kraft der Feder 21 oder dergleichen verschwenkt werden. Die Rückstellung des Sattels 11 erfolgt in dem gezeigten Beispiel mittels zwei Federn 21 gegen einen Endanschlag 12a, 12b. Die Rückstellkraft ist dabei individuell einstellbar.

Aus einem Vergleich der Figuren 1 und 2 bzw. 5a geht zudem hervor, wie die Montage des Stahlbaus für ein Hochregal vereinfacht wird. Bei den herkömmlichen Regalanlagen, d.h. mit einem Ablagebock 4 auf einem Längsträger 3 (Figur 1) wird zunächst der Regalstahlbau gestellt. Anschließend werden die Längsträger 3 mit Längen bis zu 12m mit viel Aufwand seitlich in den Stahlbau eingeführt und die Ablageböcke 4 müssen mit einem Hebezeug einzeln in den Stahlbau eingehoben und ausgerichtet werden.

Dies alles kann bei der erfindungsgemäßen Lösung entfallen. Die Ablageböcke, d.h. im Wesentlichen die Streben 7, Gegenstreben 8 und die Träger, die die Ablageecken 9 bilden, können im liegenden Zustand des Regalstahlbaus vormontiert werden. Dies reduziert den Montageaufwand erheblich.

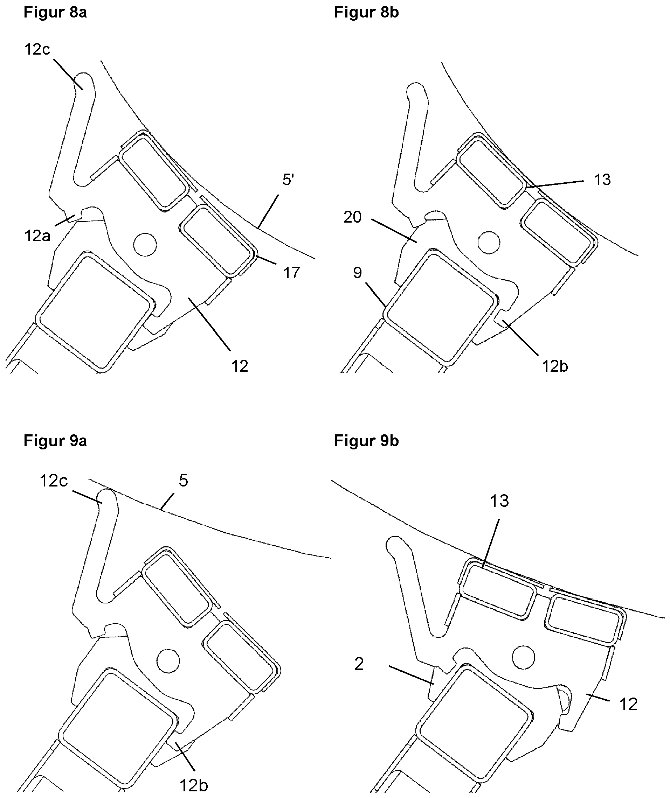

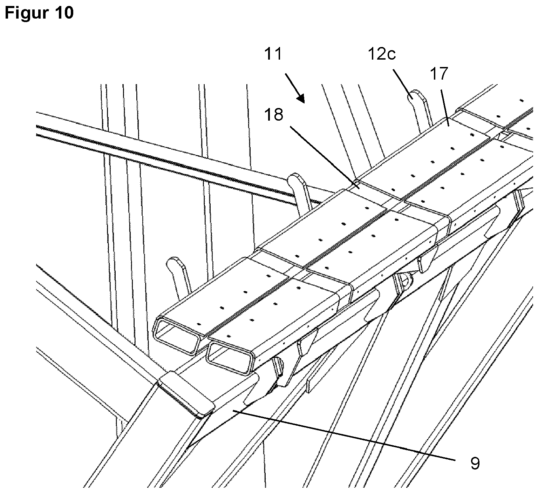

Eine weitere Ausführungsform der Erfindung ist in den Figuren 8a bis 10 dargestellt. Im Vergleich zu der in den Figuren 5a bis 7c dargestellten Ausführungsform sind die (Rückstell-)Federn 21 sowie die Arme 19 entfallen und die Gestaltung des Innenlagers 12 ist modifiziert. Dies bewirkt, dass das Innenlager 12 durch die Schwerkraft in einer in den Figuren 8a und 9a gezeigten Grundstellung bei der Übernahme bzw. Übergabe der Coils gehalten wird. In dieser Grundstellung liegt das Innenlager 12 mit dem Endanschlag 12b an dem in diesem Ausführungsbeispiel quadratischen Rohr der Ablageecke 9 an.

Figur 8a zeigt den Augenblick des Auslösens des Innenlagers 12 durch kleine (oder mittelgroße) Coils 5'. Das Auslösen, d.h. der Beginn einer Bewegung des Innenlagers, geschieht durch den direkten Kontakt zwischen Coil 5' und Ablagefläche 13, wodurch das Innenlager in eine zu dem Coil passende Position verschwenkt wird. Figur 8b zeigt den kleinsten, vollständig auf dem Sattel abgelegten Coil 5'.

Figur 9a zeigt den Augenblick des Auslösens des Innenlagers 12 durch große Coils 5. Ein direktes Auslösen durch Kontakt mit der Ablagefläche 13 ist aus geometrischen Gründen nicht mehr möglich. Die Kontur des Innenlagers 12 ist mit einem zusätzlichen Arm 12c so ausgebildet, dass dieser durch den Kontakt mit dem Coil 5 das Innenlager verschwenkt. Beim weiteren Absenken des Coils gerät dieser in direkten Kontakt mit der Ablagefläche 13 und führt die Schwingbewegung fort. Der Arm 12c (Vorauslöser) des Innenlagers 12 ist ab diesem Zeitpunkt ohne Kontakt zum Coil 5. Figur 9b zeigt den größten, vollständig auf dem Sattel abgelegten Coil. Der Vorauslöser (Arm 12c des Innenlagers 12) hat keinen Kontakt zum Coil 5.

Bei Entnahme der Coils 5 verläuft die Schwingbewegung aufgrund der Schwerkraft und der entsprechenden Ausbildung des Innenlagers 12 relativ zu dem Gelenk 14 in umgekehrter Reihenfolge und führt das Innenlager in seine Grundstellung zurück.

### Bezugszeichenliste:

- 1: Hochregallager
- 2: Stütze
- 3: Längsträger
- 4: Ablagebock
- 5, 5': Coil
- 6: Teleskop
- 7: Strebe
- 8: Gegenstrebe
- 9: Ablageecke
- 10: Freiraum
- 11: Ablagesattel
- 12: schwenkbares Element (Innenlager)
- 12a, b: Endanschlag
- 12c: Arm (Vorauslöser)
- 13: Auflagefläche
- 14: Gelenk
- 15: Spule
- 16: Verband
- 17: Schonauflage
- 18: Freimachung
- 19: Arm
- 20: Außenlager
- 21: Feder

## Patentansprüche

1. Hochregallager, insbesondere zur Lagerung von Coils oder dgl. im Wesentlichen zylindrischen Körpern, mit mehreren Paaren vertikaler Stützen (2), an denen jeweils mehrere Streben (7) und mehrere Gegenstreben (8) angelenkt sind, wobei die Paare von Stützenpaare (2) mehrere vertikal übereinander angeordnete Regalfächer aufweisen, **dadurch gekennzeichnet, dass** jeweils eine Strebe (7) und eine Gegenstrebe (8) mit der Stütze (2), an der sie angelenkt sind, ein Dreieck mit einer von der jeweiligen Stütze (2) wegweisenden Ablageecke (9) bilden, und dass die Stützen (2) eines Stützenpaares derart zueinander angeordnet sind, dass deren einander zugewandte Ablageecken (9) voneinander beabstandet sind, um ein Regalfach mit einem Freiraum (10) zwischen den Ablageecken (9) zu bilden.

2. Hochregallager nach Anspruch 1, **dadurch gekennzeichnet, dass** der Freiraum (10) mindestens 10%, insbesondere mindestens 20%, vorzugsweise etwa 25% des Abstands des Stützenpaares (2) beträgt.

3. Hochregallager nach Anspruch 1 oder 2, **dadurch gekennzeichnet, dass** die Streben (7) und die Gegenstreben (8) starr mit den jeweiligen Stützen (2) verbunden sind.

4. Hochregallager nach einem der vorhergehenden Ansprüche, **dadurch gekennzeichnet, dass** die schräg nach oben verlaufenden Streben (7) länger sind als die schräg nach unten verlaufenden Gegenstreben (8).

5. Hochregallager nach einem der vorhergehenden Ansprüche, **dadurch gekennzeichnet, dass** die Streben (7) mit den Gegenstreben (8) in den Ablageecken (9) einen Winkel von etwa 60° bis etwa 120°, insbesondere etwa 90°, bilden.

6. Hochregallager nach einem der vorhergehenden Ansprüche, **dadurch gekennzeichnet, dass** die Streben (7) mit den Stützen (2) einen Winkel von etwa 30° bis etwa 75°, insbesondere etwa 53°, bilden, und/oder dass die Gegenstreben (8) mit den Stützen (2) einen Winkel von etwa 20° bis etwa 60°, insbesondere etwa 37°,bilden.

7. Hochregallager nach einem der vorhergehenden Ansprüche, **dadurch gekennzeichnet, dass** die Ablageecken (9) jeweils mit einem Ablagesattel (11) zum Absetzen eines im Wesentlichen zylindrischen Körpers (5, 5') versehen sind.

8. Hochregallager nach Anspruch 7, **dadurch gekennzeichnet, dass** der Ablagesattel (11) als eine Schwinge ausgebildet ist, die über ein Gelenk (14) schwenkbar an der Ablageecke (9) befestigt ist.

9. Hochregallager nach Anspruch 7 oder 8, **dadurch gekennzeichnet, dass** der Ablagesattel (11) zwei voneinander beabstandete Auflageflächen (13) aufweist.

10. Hochregallager nach einem der Ansprüche 7 bis 9, **dadurch gekennzeichnet, dass** der Ablagesattel (11) relativ zu der Ablageecke (9) begrenzt schwenkbar und/oder in eine definierte Position vorgespannt ist.

11. Ablagesattel, insbesondere zur Verwendung in einem Hochregallager (1) nach einem der vorhergehenden Ansprüche, mit wenigstens einer Auflagefläche (13) zum Absetzen eines im Wesentlichen zylindrischen Körpers (5, 5'), einer aus wenigstens einer Strebe (7, 8) gebildeten Stützstruktur (7, 8, 9) und einem Gelenk (14), über das die wenigstens eine Auflagefläche (13) schwenkbar an der Stützstruktur (7, 8, 9) befestigt ist.

12. Ablagesattel nach Anspruch 11, **dadurch gekennzeichnet, dass** das Gelenk (14) ein mit der Auflagefläche (13) verbundenes Innenlager (12) und ein mit der Stützstruktur (7, 8, 9) verbundenes Außenlager (20) schwenkbar verbindet.

13. Ablagesattel nach einem der Ansprüche 11 oder 12, **dadurch gekennzeichnet, dass** die Schwenkbewegung der Auflagefläche (13) relativ zu der Stützstruktur (7, 8, 9) durch wenigstens einen Endanschlag (12a, 12b) begrenzt ist.

14. Ablagesattel nach einem der Ansprüche 11 bis 13, **dadurch gekennzeichnet, dass** die Auflagefläche (13) mittels wenigstens eines elastisch verformbaren Elements (21) relativ zu der Stützstruktur (7, 8, 9) in eine definierte Position vorgespannt ist.

15. Ablagesattel nach einem der Ansprüche 11 bis 14, **dadurch gekennzeichnet, dass** die Auflagefläche (13) zumindest bereichsweise mit einer Schonauflage (7) aus einem gegenüber der Auflagefläche (13) weicheren Material versehen ist.
